# EUROPÄISCHE PATENTSCHRIFT

(11) **EP 3 710 207 B1**
(45) Veröffentlichungstag und Bekanntmachung des Hinweises auf die Patenterteilung: **23.08.2023**
(21) Anmeldenummer: 18803584.4
(22) Anmeldetag: 07.11.2018
(51) Int. Cl.: B25J 9/16, G05B 19/418

(54) **QUALITÄTSSICHERUNG EINES PROZESSES**
QUALITY ASSURANCE OF A PROCESS
ASSURANCE QUALITÉ D'UN PROCESSUS

(30) Priorität: 17.11.2017 DE 102017010676
(43) Veröffentlichungstag der Anmeldung: 23.09.2020
(73) Patentinhaber: KUKA Deutschland GmbH, 86165 Augsburg (DE)
(72) Erfinder: KASPAR, Manuel, 86159 Augsburg (DE); BOCK, Jürgen, 86157 Augsburg (DE)
(74) Vertreter: Wallinger Ricker Schlotter Tostmann
(86) Internationale Anmeldenummer: PCT/EP2018/080401
(87) Internationale Veröffentlichungsnummer: WO 2019/096637

(56) Entgegenhaltungen:
- US-A1- 2014 129 503
- US-A1- 2017 144 378
- US-A1- 2017 157 767
- US-A1- 2017 277 174

## Beschreibung

Die vorliegende Erfindung betrifft die Qualitätssicherung eines, insbesondere robotergestützten, Prozesses.

US 2017/0277174 offenbart ein Bearbeitungssystem, bei dem die Qualität einer Bearbeitung eines Werkstücks messtechnisch erfasst wird. US 2014/0129503 offenbart ein Verfahren zum Abschätzen der Qualität einer Bearbeitung eines Werkstücks. US 2017/0157767 offenbart eine Stapelvorrichtung, die unter Verwendung von maschinellem Lernen einen Stapelvorgang lernt.

Aufgabe der vorliegenden Erfindung ist es, die Qualitätssicherung eines, insbesondere robotergestützten, Prozesses zu verbessern.

Diese Aufgabe wird durch ein Verfahren mit den Merkmalen des Anspruchs 1 gelöst. Ansprüche 11, 12 stellen ein System bzw. Computerprogrammprodukt zur Durchführung eines hier beschriebenen Verfahrens unter Schutz. Die Unteransprüche betreffen vorteilhafte Weiterbildungen.

Nach einer hier offenbarten Ausführung umfasst ein Verfahren zur Qualitätssicherung eines Prozesses nach Anspruch 1.

Durch die Verwendung eines maschinell gelernten Prozessmodells zur Ermittlung bzw. Klassifikation eines Erfolgs bzw. zur Veränderung eines in der Anwendungsphase bzw. erneut durchgeführten Prozesses kann in einer hier offenbarten Ausführung die Qualitätssicherung verbessert, insbesondere ihre Zuverlässigkeit, Geschwindigkeit und/oder Anwendungsbreite vergrößert, werden. Zusätzlich oder alternativ kann das maschinelle Lernen eine manuelle Selektion geeigneter (der) Prozessdaten in einer hier offenbarten Ausführung ersetzen.

In einer hier offenbarten Ausführung ordnet das Modell den Erfolg des (in der Anwendungsphase bzw. erneut) durchgeführten Prozesses einer von zwei oder mehr diskreten Klassen zu, in einer hier offenbarten Weiterbildung einer Fehlerfrei-Klasse oder einer Fehlerhaft-Klasse, in einer anderen hier offenbarten Weiterbildung einer Fehlerfrei-Klasse oder einer von mehrerer unterschiedlichen Fehler-Klassen bzw. Klassen, die bzw. denen unterschiedliche Fehler oder unterschiedliche(n) Grade(n) desselben Fehlers zugeordnet sind. Eine Klassifikation bzw. ein Klassifizieren eines Erfolgs kann somit in einer hier offenbarten Ausführung eine solche Zuordnung zu diskreten Klassen umfassen, insbesondere sein.

In einer hier offenbarten Ausführung ordnet das Modell dem Erfolg des (in der Anwendungsphase bzw. erneut) durchgeführten Prozesses einen Wert aus einem kontinuierlichen Wertebereich, beispielsweise zwischen 0 und 10 oder dergleichen, zu, wobei ein höherer Wert einem stärkeren oder schwächeren Erfolg bzw. Fehler(grad) entsprechend kann. Auch dies wird vorliegend zur kompakteren Darstellung als Klassifikation bzw. ein Klassifizieren eines Erfolgs bezeichnet, die bzw. das allgemein in einer hier offenbarten Ausführung eine (solche) Zuordnung aus einem kontinuierlichen Wertebereich umfassen, insbesondere sein kann. In einer hier offenbarten Ausführung kann die Klassifikation bzw. das Klassifizieren eine Regression umfassen, insbesondere sein. Hierdurch können in einer hier offenbarten Ausführung die Qualitätssicherung, insbesondere ihre Zuverlässigkeit und/oder Aussagekraft, verbessert, werden.

In einer hier offenbarten Ausführung wird der gerade durchgeführte Prozess, bei dessen Durchführen die aktuellen Prozessdaten erfasst worden sind, insbesondere ein noch verbleibender Rest- bzw. Teilprozess, verändert bzw. der (in der Anwendungsphase bzw. erneut) durchgeführte Prozess bereits online auf Basis des Modells angepasst. Zusätzlich oder alternativ kann auch ein nachfolgend erneut durchgeführter Prozess auf Basis der aktuellen Prozessdaten und des maschinell gelernten Modells, insbesondere vor einem Beginn dieses nachfolgend (in der Anwendungsphase bzw. erneut) durchgeführten Prozesses, verändert werden. Das Verändern des Prozesses kann insbesondere das Auslassen, Verändern und/oder Hinzufügen von Prozessschritten umfassen.

Entsprechend ordnet in einer hier offenbarten Ausführung das maschinell gelernte Modell Prozessdaten eines (erneut) durchgeführten Prozesses einem Erfolg dieses Prozesses zu, es kann die Prozessdaten insbesondere auf den Erfolg abbilden. Zusätzlich oder alternativ ordnet in einer hier offenbarten Ausführung das maschinell gelernte Modell Prozessdaten eines (erneut) durchgeführten Prozesses einer Veränderung des Prozesses zu, es kann die Prozessdaten insbesondere auf die Veränderung abbilden. Die Veränderung kann in einer hier offenbarten Ausführung eine Änderung von Soll- und/oder Schwell-Werten eines Roboterprogramms zum Durchführen des Prozesses umfassen. Hierdurch kann der Prozess besonders vorteilhaft verändert bzw. auf die aktuellen Prozessdaten reagiert werden.

Die Lern-Prozessdaten und die aktuellen Prozessdaten sind in einer hier offenbarten Ausführung Werte derselben bzw. für dieselben Parameter. Gleichermaßen können die aktuellen Prozessdaten auch nur Werte (für) eine(r) Teil- bzw. Untermenge der Parameter der Lern-Prozessdaten sein, insbesondere die Eingabe- bzw. Eingangsparameter des Prozessmodells durch das maschinelle Lernen entsprechend reduziert werden.

Erfindungsgemäß wird der Prozess vollständig oder teilweise durch einen oder mehrere Roboter durchgeführt bzw. ist ein robotergestützter Prozess. Solche Prozesse stellen, insbesondere aufgrund ihrer Komplexität, Abläufe, Durchlaufzeiten und/oder Widerholungszahlen, besonders vorteilhafte Anwendungen einer erfindungsgemäßen Qualitätssicherung dar.

Erfindungsgemäß aufweisen die aktuellen Prozessdaten und/oder Lern-Prozessdaten roboterspezifische Daten, insbesondere Ist- und/oder Soll-Daten, insbesondere sein, in einer hier offenbarten Ausführung durch roboterseitige bzw. -feste Sensoren, insbesondere am, in einer hier offenbarten Ausführung im, Roboter angeordnete Sensoren, insbesondere Gelenk- und/oder Antriebs-Sensoren, und/oder roboterexterne bzw. (vom Roboter) separate Sensoren, insbesondere Kameras oder dergleichen, erfasst werden bzw. durch roboterseitige bzw. -feste Sensoren, insbesondere am, in einer hier offenbarten Ausführung im, Roboter angeordnete Sensoren, insbesondere Gelenk- und/oder Antriebs-Sensoren, und/oder roboterexterne bzw. (vom Roboter) separate Sensoren, insbesondere Kameras oder dergleichen, erfasste Daten. Hierdurch können in einer hier offenbarten Ausführung Prozessdaten genutzt werden, bezüglich derer das Prozessmodell hochsensitiv sein kann, die besonders zuverlässig sind und/oder Prozessdaten zusätzlich zur Qualitätssicherung genutzt werden, die auch, insbesondere bereits, für andere Zwecke, insbesondere zur Steuerung und/oder Überwachung des bzw. der Roboter, erfasst werden. Entsprechend umfassen die roboterspezifischen Prozessdaten in einer hier offenbarten Ausführung Daten, die (auch) zur Steuerung und/oder Überwachung des bzw. der Roboter verwendet werden bzw. werden der bzw. die Roboter in einer hier offenbarten Ausführung während des erneuten Durchführens des Prozesses auf Basis der aktuellen Prozessdaten gesteuert, wobei vorliegend zur kompakteren Darstellung allgemein auch ein Regeln verallgemeinernd als Steuern bezeichnet wird.

Erfindungsgemäß umfassen diese roboterspezifischen Prozessdaten Posen einer oder mehrerer roboterfester Referenzen, insbesondere eines TCPs, einer oder mehrerer Roboterachsen oder dergleichen, und/oder erste und/oder höhere Zeitableitungen hiervon, insbesondere sein, in einer hier offenbarten Ausführung ein-, zwei- oder dreidimensionale Positionen und/oder ein-, zwei- oder dreidimensionale Orientierungen im kartesischen Arbeitsraum und/oder Achs- und/oder Antriebskoordinaten bzw. -stellungen bzw. Zeitableitungen hiervon. Zusätzlich oder alternativ können diese Daten in einer hier offenbarten Ausführung Kräfte an einer oder mehreren roboterfesten Referenzen umfassen, insbesondere sein. Vorliegend werden zur kompakteren Darstellung allgemein auch antiparallele Kräftepaare bzw. Drehmomente verallgemeinernd als Kräfte bezeichnet.

Zusätzlich oder alternativ können diese Daten in einer hier offenbarten Ausführung Antriebsgrößen, insbesondere elektrische Größen, von Roboterantrieben, insbesondere Motorströme und/oder -spannungen, umfassen, insbesondere sein.

Hierdurch können in einer hier offenbarten Ausführung Prozessdaten genutzt werden, bezüglich derer das Prozessmodell hochsensitiv sein kann, die besonders zuverlässig sind und/oder Prozessdaten zusätzlich zur Qualitätssicherung genutzt werden, die auch, insbesondere bereits, für andere Zwecke, insbesondere zur Steuerung und/oder Überwachung des bzw. der Roboter, erfasst werden. Vorteilhafterweise muss dabei in einer hier offenbarten Ausführung die Sensitivität des Prozesses bezüglich dieser Daten nicht a priori bekannt sein.

Somit liegt ein besonderer Vorteil einer hier offenbarten Ausführung der vorliegenden Erfindung in der Verwendung bereits vorhandener Sensoren am Roboter, so dass in einer hier offenbarten Ausführung keine eigene bzw. weitere Sensorik zur Qualitätssicherung mehr vorgesehen, kalibriert und gewartet werden muss.

In einer hier offenbarten Ausführung weisen die aktuellen und/oder Lern-Prozessdaten (jeweils) Werte des- oder derselben Parameter für verschiedene Zeitpunkte während des durchgeführten Prozesses, insbesondere in einem vorgegebenen Teil- bzw. Unterabschnitt des Prozesses, auf, wobei der Teilabschnitt, insbesondere seine (zeitliche) Länge und/oder seine Position innerhalb des Prozesses, in einer hier offenbarten Weiterbildung durch das maschinelle Lernen vorgegeben, insbesondere verändert, wird.

Durch die Verwendung von solchen Zeitserien bzw. -verläufen können in einer hier offenbarten Ausführung Prozessdaten genutzt werden, bezüglich derer das Prozessmodell hochsensitiv sein kann und/oder Prozessdaten zusätzlich zur Qualitätssicherung genutzt werden, die auch, insbesondere bereits, für andere Zwecke, insbesondere zur Steuerung und/oder Überwachung des bzw. der Roboter, erfasst werden.

Durch das maschinelle Lernen kann in einer hier offenbarten Ausführung ein Zeitfenster innerhalb des Prozesses, dessen Daten bzw. Zeitverläufe verwendet werden, verkleinert und/oder zeitlich verschoben werden. Hierdurch können in einer hier offenbarten Ausführung Prozessdaten genutzt werden, bezüglich derer das Prozessmodell hochsensitiv sein kann, die besonders zuverlässig sind und/oder die Größe bzw. Menge der Prozessdaten reduziert und so die Rechenzeit verkürzt werden. Zusätzlich oder alternativ kann hierdurch in einer hier offenbarten Ausführung auch der aktuell durchgeführte (weitere) Prozess noch verändert und so gegebenenfalls ein Versagen bzw. Fehler verhindert bzw. behoben werden. Entsprechend findet in einer hier offenbarten Ausführung die Ermittlung des Erfolgs des in der Anwendungsphase durchgeführten Prozesses und/oder dessen Veränderung bereits während des Prozesses statt.

Zusätzlich oder alternativ umfasst in einer hier offenbarten Ausführung das Erfassen der aktuellen und/oder Lern-Prozessdaten ein Normieren. Hierdurch kann in einer hier offenbarten Ausführung die Verarbeitung und/oder Signifikanz der Prozessdaten verbessert werden.

Der Prozess kann in einer hier offenbarten Ausführung ein (Abarbeiten eines) Roboterprogramm(s) umfassen, ein wiederholtes erneutes Durchführen des Prozesses insbesondere das wiederholte Durch- bzw. Ausführen bzw. Abarbeiten dergleichen Prozessschritte bzw. einer Sequenz von Prozessschritten mit jeweils einem ersten bzw. Anfangs- und einem letzten bzw. End-Prozessschritt.

In einer hier offenbarten Ausführung werden auf Basis erfasster Lern-Prozessdaten weitere Lern-Prozessdaten augmentiert und das Modell auch auf Basis dieser augmentierten Lern-Prozessdaten maschinell gelernt. Hierdurch kann in einer hier offenbarten Ausführung die Lernphase verkürzt und/oder die Präzision und/oder Zuverlässigkeit des Modells verbessert werden.

In einer hier offenbarten Ausführung ist das Modell zur Bewertung eines Szenarios des Prozesses in Abhängigkeit von dabei erfassten aktuellen Prozessdaten auf Basis von Lern-Prozessdaten eingerichtet, die bei Durchführung eines oder mehrerer anderer Szenarien des Prozesses erfasst worden sind. Mit anderen Worten kann das Modell ein generalisiertes Modell sein, das auf Basis eines oder mehrerer Szenarien des Prozesses maschinell gelernt und dann auch auf andere Szenarien des Prozesses angewendet wird. Verschiedene Szenarien eines Prozesses können insbesondere unterschiedliche Posen des bzw. der Roboter und/oder unterschiedliche im Prozess verwendete Werkstücke und/oder Werkzeuge umfassen. Hierdurch kann in einer hier offenbarten Ausführung die Lernphase verkürzt und/oder die Anwendungsbreite der Qualitätssicherung verbessert werden.

In einer hier offenbarten Ausführung werden Lern-Bewertungen mithilfe von menschlichen Eingaben und/oder automatisch, insbesondere sensorgestützt, erfasst, in einer hier offenbarten Weiterbildung in der Lernphase durchgeführte Prozesse manuell oder automatisch gelabelt. Hierdurch kann in einer hier offenbarten Ausführung eine besonders hohe Aussagekraft und/oder Zuverlässigkeit des Modells erreicht werden.

In einer hier offenbarten Ausführung weist das maschinelle Lernen Deep Learning, insbesondere ein Trainieren und/oder Validieren eines neuronalen Netzes, auf. Entsprechend kann in einer hier offenbarten Ausführung das Modell ein neuronales Netz aufweisen, insbesondere sein, das durch das maschinelle Lernen trainiert und/oder validiert wird. In einer hier offenbarten Weiterbildung wird hierzu das Modell bzw. neuronale Netz auf Basis eines Teils der in der Lernphase durchgeführten Prozesse trainiert und auf Basis eines anderen Teils der in der Lernphase durchgeführten Prozesse validiert bzw. die Übereinstimmung des Modells mit den erfassten Lern-Bewertungen für diesen anderen Teil überprüft.

In einer hier offenbarten Ausführung umfasst das maschinelle Lernen eine, insbesondere variable, Vorgabe einer erforderlichen Zuverlässigkeit der modellgestützten Bewertung, wobei das maschinelle Lernen in einer hier offenbarten Weiterbildung abgebrochen bzw. beendet wird, sobald die Validierung wenigstens die vorgegebene erforderliche Zuverlässigkeit ergibt.

Ein solches maschinelles Lernen bzw. Modell ist besonders zur Verarbeitung von Zeitverläufen von robotergestützten Sensordaten geeignet.

In einer hier offenbarten Ausführung werden in Abhängigkeit von dem ermittelten Erfolg des erneut durchgeführten Prozesses unterschiedliche Nachfolgeprozesse durchgeführt, insbesondere ein erster Nachfolgeprozess, insbesondere eine Weiterbearbeitung und/oder ein (Ab)transport eines in dem erneut durchgeführten Prozess gehandhabten, insbesondere bearbeiteten, Werkstücks bei fehlerfrei( klassifizierter Bearbeitung und eine Nacharbeitung oder Aussortierung bei (als) fehlerhaft klassifziert)er Bearbeitung.

In einer hier offenbarten Ausführung kommuniziert ein Lernmittel zum maschinellen Lernen des Modells mit einem Prozessdaten-Erfassungsmittel zum Erfassen von aktuellen und/oder Lern-Prozessdaten, einem Bewertungs-Erfassungsmittel zum Erfassen von Lern-Bewertungen, einem Nachfolgemittel zum Durchführen unterschiedlicher Nachfolgeprozesse in Abhängigkeit von dem ermittelten Erfolg des erneut durchgeführten Prozesses und/oder einem Änderungsmittel zum Ändern eines erneut durchgeführten Prozesses, insbesondere über eine OPC-Architektur, vorzugsweise über eine OPC UA Architektur, insbesondere eine OPC UA Pub/Sub Architektur. In einer hier offenbarten Weiterbildung weist das Prozessdaten-Erfassungsmittel, das Bewertungs-Erfassungsmittel, das Nachfolgemittel, das Änderungsmittel und/oder das Lernmittel (jeweils) einen OPC UA Client und/oder OPC UA Server auf, wobei in einer hier offenbarten Ausführung eines oder mehrere dieser Mittel in einer Steuerung des bzw. eines oder mehrerer der Roboter(s) angeordnet oder robotersteuerungsextern bzw. von der Robotersteuerung separat ausgebildet sein und mit der Steuerung, insbesondere drahtlos oder drahtgebunden, kommunizieren können.

Eine solche Architektur erhöht in einer hier offenbarten Ausführung die Flexibilität der Qualitätssicherung.

Nach einer hier offenbarten Ausführung ist ein System zur Qualitätssicherung des Prozesses, insbesondere hard- und/oder software-, insbesondere programmtechnisch, zur Durchführung eines hier beschriebenen Verfahrens eingerichtet.

In einer hier offenbarten Ausführung weist das System bzw. sein(e) Mittel den bzw. die Roboter zur Durchführung des robotergestützten Prozesses und in einer hier offenbarten Weiterbildung die roboterseitigen und/oder roboterexternen Sensoren auf. Zusätzlich oder alternativ weist das System bzw. sein(e) Mittel auf:
- Mittel zum Normieren der aktuellen und/oder Lern-Prozessdaten;
- Mittel zum Vorgeben des Teilabschnitts, insbesondere seiner Länge und/oder seiner Position innerhalb des Prozesses;
- Mittel zum Augmentieren weiterer Lern-Prozessdaten auf Basis erfasster Lern-Prozessdaten;
- Mittel zum Erfassen von Lern-Bewertungen mithilfe von menschlichen Eingaben und/oder automatisch, insbesondere sensorgestützt;
- Mittel zum Deep Learning, insbesondere zum Trainieren und/oder Validieren eines neuronalen Netzes, und/oder Mittel zum, insbesondere variablen, Vorgeben einer erforderlichen Zuverlässigkeit der modellgestützten Bewertung; und/oder
- Mittel zum Durchführen unterschiedlicher Nachfolgeprozesse in Abhängigkeit von dem ermittelten Erfolg des erneut durchgeführten Prozesses.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Die CPU kann insbesondere eine Graphikarte (GPU) und/oder wenigstens ein(en) Neural Computing Chip aufweisen, insbesondere sein. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere den Prozess und/oder dessen Qualitätssicherung durchführen kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

Weitere Vorteile und Merkmale ergeben sich aus den Unteransprüchen und den Ausführungsbeispielen. Hierzu zeigt, teilweise schematisiert:
- Fig. 1:: ein Verfahren zur Qualitätssicherung eines Prozesses nach einer Ausführung der vorliegenden Erfindung; und
- Fig. 2:: ein System zur Durchführung des Verfahrens nach einer Ausführung der vorliegenden Erfindung.

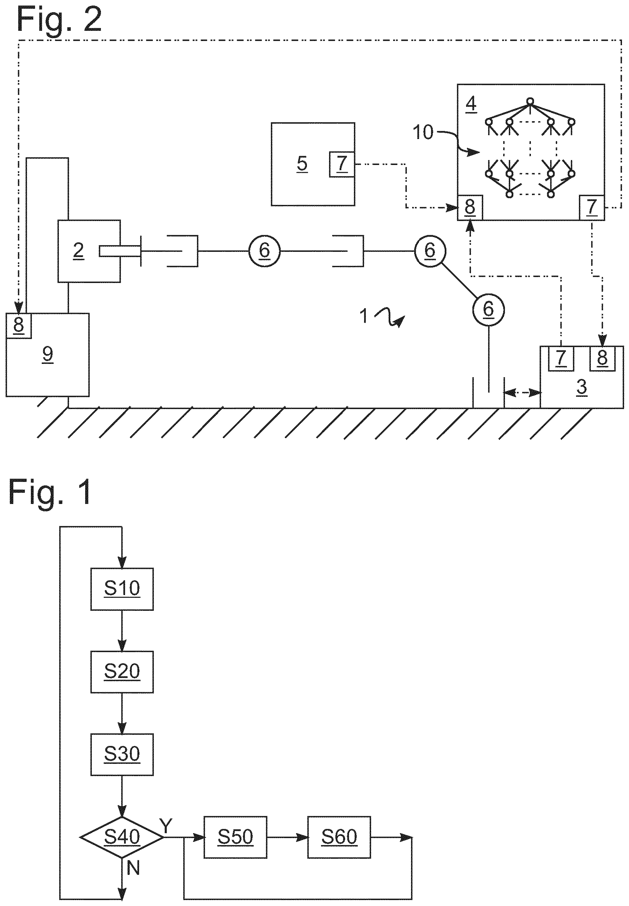

Fig. 2 zeigt ein System zur Durchführung eines Verfahrens zur Qualitätssicherung eines Prozesses nach einer Ausführung der vorliegenden Erfindung.

Das System weist einen Roboter 1 zur Durchführung eines Prozesses, im Ausführungsbeispiel exemplarisch eines robotergestützten Fügens eines Werkstücks 2, eine Robotersteuerung 3, ein Lernmittel 4 sowie eine Mensch-Maschine-Schnittstelle 5, beispielsweise ein graphisches Ein-/Ausgabegerät oder dergleichen, auf.

Der Roboter weist Achssensoren 6 auf, die Achs- bzw. Antriebspositionen und/oder -geschwindigkeiten und/oder -kräfte bzw. -drehmomente erfassen und mit der Robotersteuerung 3 kommunizieren.

Die Robotersteuerung 3 und das Lernmittel 4 weisen jeweils einen OPC UA Server 7 und einen OPC UA Client 8 auf, die Mensch-Maschine-Schnittstelle 5 einen OPC UA Server 7, ein Fördermittel 9 zum Zuführen zu fügender und/oder Abfördern gefügter Werkstücke einen OPC UA Client 8.

In einem Schritt S10 (vgl. Fig. 1) führt der Roboter 1 einen Fügeprozess durch. Dabei werden mithilfe der Sensoren 6 Lern-Prozessdaten erfasst.

Nach Beenden des Prozesses bewertet ein Bediener über entsprechende Eingabe an der Mensch-Maschine-Schnittstelle 5 in einem Schritt S20 den Prozess als fehlerhaft oder fehlerfrei.

In einem Schritt S30 wird ein neuronales Netz 10 im Lernmittel 4 maschinell gelernt, das hierzu die in Schritt S10 erfassten Lern-Prozessdaten und in Schritt S20 erfassten Lern-Bewertungen nutzt. Dabei wird das neuronale Netz 10 auf Basis der ersten Wiederholungen des Prozesses trainiert und anschließend auf Basis nachfolgender Wiederholungen des Prozesses validiert.

In einem Schritt S40 wird geprüft, ob das neuronale Netz 10 bereits eine vorgegebene erforderliche Zuverlässigkeit aufweist.

Solange dies nicht der Fall ist (S40: "N"), wird die Lernphase S10-S40 fortgesetzt, in der durch weiteres Wiederholen des Prozesses weitere Lern-Prozessdaten und Bewertungen erfasst werden, bis die vorgegebene erforderliche Zuverlässigkeit erreicht ist (S40: "Y").

Dann wird in einer Anwendungsphase in einem Schritt S50 der Prozess erneut durchgeführt und dabei nun aktuelle Prozessdaten erfasst.

Das neuronale Netz 10 klassifiziert in einem Schritt S60 den durchgeführten Prozess auf Basis dieser aktuellen Prozessdaten als fehlerhaft oder fehlerfrei. Das Lernmittel 4 stellt über den OPC UA Server 7 entsprechende Daten bereit, die das Fördermittel 9 bzw. dessen OPC UA Client 8 abfragt. Das Fördermittel 9 fördert in Schritt S60 das gefügte Werkstück entsprechend dieser Klassifikation zur Weiterbearbeitung oder einer Nacharbeitung.

Zusätzlich oder alternativ kann in Schritt S60 auch der im aktuellen Schritt S50 oder bei dessen Wiederholung durchgeführte Prozess auf Basis einer Ausgabe des neuronalen Netzes 10 verändert werden, beispielsweise eine Fügekraft erhöht, eine Fügeposition verändert oder dergleichen.

Obwohl in der vorhergehenden Beschreibung exemplarische Ausführungen erläutert wurden, sei darauf hingewiesen, dass eine Vielzahl von Abwandlungen möglich ist.

So können in einer Abwandlung in einer oder mehreren Wiederholungen in Schritt S10 anstelle einer weiteren Durchführung des Prozesses auch weitere Lern-Prozessdaten augmentiert werden.

Zusätzlich oder alternativ kann in Schritt S20 die Lern-Bewertung auch automatisch, beispielsweise durch Prüfen des gefügten Bauteils mittels Kamera oder dergleichen, erfolgen.

Zusätzlich oder alternativ kann das Lernen in Schritt S30 die Verkleinerung und/oder Verschiebung eines Zeitfensters innerhalb des Prozesses umfassen, wobei anschließend in Schritten S50, S60 nur noch Prozessdaten aus diesem Zeitfenster verwendet werden.

Das Lernmittel 4 kann beispielsweise in der Cloud angeordnet sein, gleichermaßen kann es auch in der Robotersteuerung 3, der Mensch-Maschine-Schnittstelle 5 oder anderer Stelle angeordnet sein.

Das neuronale Netz 10 kann ein generelles Modell sein, welches auch bei einem Fügen in anderen Roboterposen, einem Fügen andersartiger Werkstücke oder dergleichen zur Qualitätssicherung verwendet werden kann.

Zusätzlich oder alternativ zu Antriebskräften bzw. -drehmomenten können in einer Abwandlung auch Motorströme oder dergleichen als Prozessdaten erfasst bzw. verwendet werden.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Roboter
- 2: Werkstück
- 3: Robotersteuerung
- 4: Lernmittel
- 5: Mensch-Maschine-Schnittstelle
- 6: Sensor
- 7: OPC UA Server
- 8: OPC UA Client
- 9: Fördermittel
- 10: neuronales Netz

## Patentansprüche

1. Verfahren zur Qualitätssicherung eines Prozesses, wobei das Verfahren die mehrfach wiederholten Schritte:
- Durchführen (S10) des Prozesses;
- Erfassen (S10) von Lern-Prozessdaten bei diesem Durchführen des Prozesses; und
- Erfassen (S20) einer Lern-Bewertung des durchgeführten Prozesses;
den Schritt:
- maschinelles Lernen (S30) eines Modells (10) des Prozesses auf Basis der erfassten Lern-Prozessdaten und Lern-Bewertungen;
und die, insbesondere mehrfach wiederholten, Schritte aufweist:
- erneutes Durchführen (S50) des Prozesses; und
- Erfassen (S50) von aktuellen Prozessdaten bei diesem erneuten Durchführen des Prozesses;
wobei auf Basis der aktuellen Prozessdaten und des maschinell gelernten Modells (10)
- ein Erfolg des erneut durchgeführten Prozesses ermittelt, insbesondere klassifiziert wird (S60), und
- in Abhängigkeit von dem ermittelten Erfolg des erneut durchgeführten Prozesses eine Weiterbearbeitung und/oder ein Transport eines in dem erneut durchgeführten Prozess gehandhabten, insbesondere bearbeiteten, Werkstücks (2) bei fehlerfreier Bearbeitung und eine Nacharbeitung oder Aussortierung bei fehlerhafter Bearbeitung durchgeführt wird; und
wobei der Prozess wenigstens teilweise durch wenigstens einen Roboter (1) durchgeführt wird und die aktuellen und/oder Lern-Prozessdaten roboterspezifische, insbesondere durch roboterseitige und/oder roboterexterne Sensoren (6) erfasste, Ist- und/oder Soll-Daten aufweisen, wobei die roboterspezifischen aktuellen und/oder Lern-Prozessdaten
- Posen einer oder mehrerer roboterfester Referenzen, insbesondere eines TCPs,
- Posen einer oder mehrerer Roboterachsen, und/oder
- erste und/oder höhere Zeitableitungen hiervon und/oder
- Kräfte an wenigstens einer roboterfesten Referenz und/oder Antriebsgrößen von Roboterantrieben
umfassen.

2. Verfahren nach Anspruch 1, **dadurch gekennzeichnet, dass** auf Basis der aktuellen Prozessdaten und des maschinell gelernten Modells (10) der erneut durchgeführte Prozess verändert wird (S60).

3. Verfahren nach einem der vorhergehenden Ansprüche, **dadurch gekennzeichnet, dass** die aktuellen und/oder Lern-Prozessdaten Werte desselben Parameters für verschiedene Zeitpunkte während des durchgeführten Prozesses, insbesondere in einem vorgegebenen Teilabschnitt des Prozesses, aufweisen.

4. Verfahren nach einem der vorhergehenden Ansprüche, **dadurch gekennzeichnet, dass** das Erfassen der aktuellen und/oder Lern-Prozessdaten ein Normieren umfasst.

5. Verfahren nach Anspruch 3 oder 4, **dadurch gekennzeichnet, dass** der Teilabschnitt, insbesondere seine Länge und/oder seine Position innerhalb des Prozesses, durch das maschinelle Lernen vorgegeben wird.

6. Verfahren nach einem der vorhergehenden Ansprüche, **dadurch gekennzeichnet, dass** auf Basis erfasster Lern-Prozessdaten weitere Lern-Prozessdaten augmentiert (S10) und das Modell (10) auch auf Basis dieser augmentierten Lern-Prozessdaten maschinell gelernt wird.

7. Verfahren nach einem der vorhergehenden Ansprüche, **dadurch gekennzeichnet, dass** das Modell (10) zur Bewertung eines Szenarios des Prozesses in Abhängigkeit von dabei erfassten aktuellen Prozessdaten auf Basis bei Durchführung wenigstens eines anderen Szenarios des Prozesses erfasster Lern-Prozessdaten eingerichtet ist.

8. Verfahren nach einem der vorhergehenden Ansprüche, **dadurch gekennzeichnet, dass** Lern-Bewertungen mithilfe von menschlichen Eingaben und/oder automatisch, insbesondere sensorgestützt, erfasst werden.

9. Verfahren nach einem der vorhergehenden Ansprüche, **dadurch gekennzeichnet, dass** das maschinelle Lernen Deep Learning, insbesondere ein Trainieren und/oder Validieren eines neuronalen Netzes (10), und/oder eine, insbesondere variable, Vorgabe einer erforderlichen Zuverlässigkeit der modellgestützten Bewertung aufweist.

10. Verfahren nach einem der vorhergehenden Ansprüche, **dadurch gekennzeichnet, dass** ein Lernmittel (4) zum maschinellen Lernen des Modells (10) mit einem Prozessdaten-Erfassungsmittel (3, 6) zum Erfassen von aktuellen und/oder Lern-Prozessdaten, einem Bewertungs-Erfassungsmittel (5) zum Erfassen von Lern-Bewertungen, einem Nachfolgemittel (9) zum Durchführen unterschiedlicher Nachfolgeprozesse in Abhängigkeit von dem ermittelten Erfolg des erneut durchgeführten Prozesses und/oder einem Änderungsmittel (3) zum Ändern eines erneut durchgeführten Prozesses, insbesondere über eine OPC-Architektur, kommuniziert.

11. System zur Qualitätssicherung eines Prozesses, das zur Durchführung eines Verfahrens nach einem der vorhergehenden Ansprüche eingerichtet ist.

12. Computerprogrammprodukt mit einem Programmcode, der auf einem von einem Computer lesbaren Medium gespeichert ist, zur Durchführung eines Verfahrens nach einem der Ansprüche 1 bis 10.

## Claims

1. A method of assuring the quality of a process, wherein the method comprises the following steps, which are repeated a plurality of times:
- carrying out (S10) the process;
- acquiring (S10) learning process data in the course of the carrying out of the process; and
- acquiring (S20) a learning evaluation score of the process that has been carried out;
the following step:
- machine learning (S30) a model (10) of the process on the basis of the acquired learning process data and learning evaluation scores;
and which comprises the following steps, in particular the following steps repeated a plurality of times:
- carrying out (S50) the process another time; and
- acquiring (S50) current process data in the course of the carrying out the process another time;
wherein, on the basis of the current process data and of the machine-learned model (10):
- a success of the process that has been carried out another time is determined, in particular classified (S60), and
- as a function of the determined success of the process that has been carried out another time, further processing and / or transporting of a workpiece (2) that is being handled, in particular processed, in the process that has been carried out another time, is carried out in the case of fault-free processing, and re-processing or ejecting is carried out in the case of faulty processing; and
wherein the process is at least partially carried out by at least one robot (1), and the current process data and / or the learning process data comprise robot-specific actual data and / or target data, in particular actual and / or target data detected by sensors (6) on the robot side and / or sensors (6) external to the robot, wherein the robot-specific current process data and / or the robot-specific learning process data comprise
- poses of one or more robot-fixed references, in particular of a TCP,
- poses of one or more robot axes, and / or
- first and / or higher time derivatives thereof; and / or
- forces on at least one robot-fixed reference and / or drive variables of robot drives.

2. The method as claimed in claim 1, **characterised in that**, on the basis of the current process data and the machine-learned model (10), the process that is carried out another time is modified (S60).

3. The method as claimed in any one of the preceding claims, **characterised in that** the current process data and / or the learning process data comprise values of the same parameter for different points in time during the process carried out, in particular in a partial section of the process that has been specified in advance.

4. The method as claimed in any one of the preceding claims, **characterised in that** the acquiring of the current process data and / or of the learning process data comprises a normalisation.

5. The method as claimed in claim 3 or 4, **characterised in that** the partial section, in particular its length and / or its position within the process, is specified in advance by the machine learning.

6. The method as claimed in any one of the preceding claims, **characterised in that** further learning process data are augmented (S10) on the basis of acquired learning process data, and the model (10) is also learned by machine-learning on the basis of this augmented learning process data.

7. The method as claimed in any one of the preceding claims, **characterised in that** the model (10) is set up for evaluating a scenario of the process as a function of current process data acquired in the course of this, on the basis of learning process data which have been acquired in the course of the carrying out of at least one other scenario of the process.

8. The method as claimed in any one of the preceding claims, **characterised in that** learning evaluation scores are acquired with the aid of human inputs and / or automatically, in particular in a manner that is supported by a sensor.

9. The method as claimed in any one of the preceding claims, **characterised in that** the machine learning comprises deep learning, in particular a training and / or a validation of a neural network (10), and / or a specification of a required reliability of the model-supported evaluation, in particular a variable specification of a required reliability of the model-supported evaluation.

10. The method as claimed in any one of the preceding claims, **characterised in that** a learning means (4) for machine learning the model (10) communicates with a process data acquisition means (3, 6) for acquiring current process data and / or learning process data, an evaluation acquisition means (5) for acquiring learning evaluations, a follow-up means (9) for carrying out different follow-up processes as a function of the determined success of the process which has been carried out another time, and / or a modification means (3) for modifying, in particular via an OPC architecture, a process that is carried out another time.

11. A system for assuring the quality of a process, which is set up for carrying out a method as claimed in any one of the preceding claims.

12. A computer program product comprising a program code which is stored on a computer readable medium, for carrying out a method as claimed in any one of claims 1 to 10.

## Revendications

1. Procédé d'assurance qualité d'un processus, dans lequel le procédé présente les étapes suivantes répétées plusieurs fois :
- de mise en œuvre (S10) du processus ;
- de détection (S10) de données de processus d'apprentissage lors de ladite mise en œuvre du procédé ; et
- de détection (S20) d'une évaluation d'apprentissage du processus mis en oeuvre ;
l'étape :
- d'apprentissage automatique (S30) d'un modèle (10) du processus sur la base des données de processus d'apprentissage détectées et des évaluations d'apprentissage ;
et les étapes suivantes, notamment répétées plusieurs fois :
- de mise en œuvre à nouveau (S50) du processus ; et
- de détection (S50) de données de processus instantanées lors de ladite mise en œuvre renouvelée du processus ;
dans lequel sur la base des données de processus instantanées et du modèle (10) appris automatiquement
- une réalisation avec succès du processus mis en œuvre à nouveau est déterminée, en particulier est classée (S60),
- un usinage ultérieur et/ou un transport d'une pièce (2) manipulée, en particulier usinée, dans le processus mis en œuvre à nouveau sont mis en œuvre en cas d'usinage sans anomalie et un traitement ultérieur ou un tri est mis en œuvre en cas d'usinage défectueux en fonction de la réalisation avec succès déterminée du processus mis en œuvre à nouveau ; et
dans lequel le processus est mis en œuvre au moins en partie par au moins un robot (1) et les données de processus instantanées et/ou d'apprentissage présentent des données réelles et/ou théoriques spécifiques au robot, détectées en particulier par des capteurs (6) du côté du robot/externes au robot, dans lequel les données de processus instantanées et/ou d'apprentissage spécifiques au robot comprennent
- des poses d'une ou de plusieurs références solidaires du robot, en particulier d'un TCP,
- des poses d'un ou de plusieurs axes de robot, et/ou
- des premières dérivées temporelles et/ou des dérivées temporelles supérieures de celles-ci, et/ou
- des forces sur au moins une référence solidaire du robot et/ou des grandeurs d'entraînement d'entraînements de robot.

2. Procédé selon la revendication 1, **caractérisé en ce que** le processus mis en œuvre à nouveau est modifié (S60) sur la base des données de processus instantanées et du modèle (10) appris automatiquement.

3. Procédé selon l'une quelconque des revendications précédentes, **caractérisé en ce que** les données de processus instantanées et/ou d'apprentissage présentent des valeurs du même paramètre pour différents moments pendant le processus mis en oeuvre, en particulier dans un segment partiel spécifié du processus.

4. Procédé selon l'une quelconque des revendications précédentes, **caractérisé en ce que** la détection des données de processus instantanées et/ou d'apprentissage comprend une normalisation.

5. Procédé selon la revendication 3 ou 4, **caractérisé en ce que** le segment partiel, en particulier sa longueur et/ou sa position au sein du processus, est spécifié par l'apprentissage automatique.

6. Procédé selon l'une quelconque des revendications précédentes, **caractérisé en ce que** d'autres données de processus d'apprentissage sont augmentées (S10) sur la base de données de processus d'apprentissage détectées et le modèle (10) est appris automatiquement également sur la base desdites données de processus d'apprentissage augmentées.

7. Procédé selon l'une quelconque des revendications précédentes, **caractérisé en ce que** le modèle (10) est mis au point pour évaluer un scénario du processus en fonction de données de processus instantanées détectées ce faisant sur la base de données de processus d'apprentissage détectées lors de la mise en œuvre d'au moins un autre scénario du processus.

8. Procédé selon l'une quelconque des revendications précédentes, **caractérisé en ce que** des évaluations d'apprentissage sont détectées à l'aide d'entrées réalisées par l'homme et/ou de manière automatique, en particulier avec l'assistance d'un capteur.

9. Procédé selon l'une quelconque des revendications précédentes, **caractérisé en ce que** l'apprentissage automatique apprentissage profond comprend en particulier un entraînement et/ou une validation d'un réseau neuronal (10) et/ou une spécification, en particulier variable, d'une fiabilité requise de l'évaluation sur la base d'un modèle.

10. Procédé selon l'une quelconque des revendications précédentes, **caractérisé en ce qu'**un moyen d'apprentissage (4) pour l'apprentissage automatique du modèle (10) communique avec un moyen de détection de données de processus (3, 6) pour détecter des données de processus instantanées et/ou d'apprentissage, un moyen de détection d'évaluation (5) pour détecter des évaluations d'apprentissage, un moyen de suivi (9) pour mettre en œuvre différents processus de suivi en fonction de la réalisation avec succès déterminée du processus mis en œuvre à nouveau et/ou un moyen de changement (3) pour changer un processus mis en œuvre à nouveau, en particulier par l'intermédiaire d'une architecture OPC.

11. Système d'assurance qualité d'un processus qui est mis au point pour mettre en œuvre un procédé selon l'une quelconque des revendications précédentes.

12. Produit-programme d'ordinateur avec un code de programme, qui est mémorisé sur un support lisible par ordinateur, pour la mise en œuvre d'un procédé selon l'une quelconque des revendications 1 à 10.
